Europäisches Patentamt

European Patent Office

Office européen des brevets

(19)

(11) **EP 0 540 722 B1**

(12) **FASCICULE DE BREVET EUROPEEN**

(45) Date de publication et mention
de la délivrance du brevet:
**19.06.1996 Bulletin 1996/25**

(21) Numéro de dépôt: 92911735.6

(22) Date de dépôt: 21.05.1992

(51) Int. Cl.⁶: **B21H 5/02**, B21H 9/00,
B23F 23/12, B23F 23/04,
B23Q 7/04, B23B 3/06

(86) Numéro de dépôt international:
**PCT/FR92/00452**

(87) Numéro de publication internationale:
**WO 92/20474 (26.11.1992 Gazette 1992/29)**

(54) **DISPOSITIF ET PROCEDE PERMETTANT LE FORMAGE A FROID DE CANNELURES SUR LA PAROI D'UNE PIECE DE REVOLUTION**

VORRICHTUNG UND VERFAHREN ZUM KALTFORMEN VON NUTEN IN DIE WANDUNG EINES ROTATIONSKÖRPERS

DEVICE AND METHOD FOR COLD-FORMING GROOVES ON THE WALL OF A REVOLUTION PART

(84) Etats contractants désignés:
**AT CH DE ES FR IT LI**

(30) Priorité: **23.05.1991 FR 9106619**

(43) Date de publication de la demande:
**12.05.1993 Bulletin 1993/19**

(73) Titulaire: **ESCOFIER TECHNOLOGIE S.A.**
**Société Anonyme dite:**
**F-71107 Châlon-sur-Sâone (FR)**

(72) Inventeurs:
• **CRETIN, Michel**
**F-71640 Givry (FR)**
• **LESPOUR, Jean-Paul**
**Gigny, F-71240 Sennecey-le-Grand (FR)**
• **MARCON, Charles**
**F-71150 Chagny (FR)**

(74) Mandataire: **Desolneux, Jean-Paul Charles**
**Setval**
**Division Propriété Industrielle**
**130, rue de Silly**
**BP 413**
**92103 Boulogne-Billancourt Cédex (FR)**

(56) Documents cités:
EP-A- 0 259 508          DE-A- 1 552 194
DE-A- 3 149 633          DE-C- 915 328
DE-C- 3 711 927          FR-A- 1 148 950
FR-A- 1 562 283          GB-A- 1 384 387
GB-A- 1 384 388          LU-A- 28 330
LU-A- 30 467             SU-A- 732 062
US-A- 4 677 836

• **Machine Design, vol. 41, no. 9, 17 avril 1969,
(Cleveland, US) F.J. Lavoie: "Roll-forming gears",
pages 233-238, voir page 234**
• **PATENT ABSTRACTS OF JAPAN vol. 9, no. 172
(M-397)(1895) 17 Juillet 1985 & JP-A-60 044 220
(MITSUBISHI JUKOGYO) 9 Mars 1985**
• **WERKSTATT UND BETRIEB. vol. 103, no. 7,
Juillet 1970, MUNCHEN DE pages 507 - 515 H.
LOOS 'Zahnrad-Rollen'**
• **Werkstatt und Betrieb, vol. 103, no. 7, juillet 1970
(Munich, DE) H. Loos: "Zahnrad-Rollen", pages
507-515, voir page 509; figure 10**

**Description**

Le dispositif et le procédé suivant l'invention concernent le formage à froid de cannelures sur la paroi de révolution d'une pièce au moyen d'une paire de molettes entraînées en rotation. Ces molettes comportent des cannelures droites ou inclinées sur leur paroi périphérique qui sont mises en appui contre la paroi de la pièce afin de réaliser par roulage une déformation plastique de cette paroi et obtenir ainsi des cannelures correspondantes. Par roulage on entend de façon générale le fait d'appliquer une force sur les molettes en rotation, les molettes et leur cannelures prenant en sandwich la pièce de révolution sur laquelle le formage doit être réalisé, la pièce se trouvant entraînée en rotation par frottement avec les molettes et leur cannelures. D'une façon générale les cannelures qu'on se propose de réaliser ainsi permettent d'obtenir des arbres à cannelures parallèles ou des pignons à dentures droites ou inclinées ou encore des filetages pour toutes sortes d'applications.

On connaît plusieurs dispositifs ou procédés permettant de réaliser par roulage de telles cannelures. Le brevet FR 2 408 408 GROB décrit un dispositif et un procédé de formage par moletage à froid d'une denture sur une pièce cylindrique placée en rotation libre sur un bâti de machine.

Ce procédé concerne une machine du type qui travaille à distance entre axes fixe, c'est-à-dire une machine dont les axes des arbres 8, 8' qui supportent les molettes de formage 9, 9' sont maintenus à une distance égale et constante de l'axe de la pièce de révolution à former pendant toute la durée de l'opération de formage. Les deux molettes 9, 9' comportent des hauteurs radiales de dents croissantes dans le sens de rotation pour pénétrer progressivement dans la pièce 28. Comme cela est expliqué dans ce document on réalise les dentures en moins d'un tour de molettes puisque le profil de denture de ces molettes est évolutif. Il est nécessaire de réaliser un calage angulaire trés précis des molettes, l'une par rapport à l'autre, pour que les dents de chaque molette, au cours de la rotation de la pièce, s'engagent avec une grande précision dans les creux formés par les dents de la molette disposée de l'autre côté de la pièce.

Ce document décrit des moyens permettant l'obtention de pièces de précision. Il insiste sur la nécessité de caler efficacement les moyens qui supportent les paliers des arbres qui entraînent tes molettes 9, 9' de formage. Un tel calage au moyen de cales 15, 15' bloquées par des vis 16, 16' prend appui sur le bâti de la machine 1. La synchronisation des arbres 8, 8' qui portent les molettes est assurée par un pignon 21 qui engrene sur deux autres 17, 17' solidaires chacun de l'un de ces deux arbres. Un calage angulaire trés précis des molettes sur les arbres doit être réalisé. L'entraînement des arbres de molettes est assuré par deux moteurs électriques. Une liaison par des arbres 7, 7' articulés, munis de joints de cardan et d'éléments coulissants non représentés permet d'ajuster la distance entre axes des arbres 8, 8' porte-molettes lorsque cela est nécessaire.

Bien que cela ne soit pas précisé dans ce document, les dispositifs de formage à distance avec entre-axe fixe ne permettent de réaliser des pièces de précision qu'à condition de disposer de molettes à profit évolutif de qualité dont la réalisation est coûteuse. Le montage précis de ces molettes est relativement délicat et une très grande rigidité des moyens qui supportent les paliers d'arbre ainsi que du bâti de la machine est nécessaire. Enfin ces machines ne permettent de réaliser, en général, que des pièces de petites dimensions. En effet la nécessité de réaliser les pièces en moins d'un tour de molette limite les possibilités de réalisation de pièces de fortes dimensions.

Un autre procédé de formage à froid de cannelures sur la paroi de révolution d'une pièce consiste à mettre en oeuvre des molettes comportant des cannelures ou dents à profit constant au lieu de molettes comportant de telles cannelures ou dents à profit évolutif. La pénétration des cannelures ou dents de ces molettes, à profil constant et donc de hauteur radiale constante, dans la paroi de révolution de la pièce a former est réalisée par diminution progressive de la distance entre axes d'une paire de molettes, montées en rotation sur des arbres, entre lesquelles est placée la pièce de révolution à former.

La demande de brevet DE 2025659 CHURCHILL décrit un dispositif comportant deux molettes 1, 2 montées sur des arbres reposant sur des paliers fixés à l'avant de deux chariots 11, 12, aptes à coulisser sur des glissières pour faire varier la distance entre les axes des arbres porte-molette 1, 2 en vue d'amener les profits de formage de celles-ci en contact avec la paroi de révolution de la pièce 3 à former.

Le rapprochement des deux chariots 11, 12, suivant un axe perpendiculaire à celui de la pièce à former 3, est réalisé au moyen de deux vérins parallèles dont les cylindres 4, 5 sont logés respectivement dans les chariots 11, 12, tandis que les têtes des pistons 6, 7 sont fixées à l'avant des chariots opposés 12, 11. Des glissières 8, 9 permettent aux deux chariots de coulisser parallèlement l'un vers l'autre, les molettes 1, 2, à profit constant, venant ainsi au contact de la pièce à former 3. La profondeur de pénétration est contrôlée au moyen de butées 26, 27 dont on ajuste le degré de vissage sur les pistons 6, 7. On limite ainsi l'avance des deux chariots en direction l'un de l'autre et donc la profondeur de pénétration des profits des molettes dans la paroi de la pièce à former. Il est de plus indiqué qu'on peut faciliter l'engagement des dents des molettes 1, 2 dans ta paroi de la pièce à former 3, en lançant en rotation cette pièce 3 avant engagement des molettes. On peut, de même, réaliser sur tout le pourtour de la pièce à former des amorces de cannelures, par exemple par fraisage, pour guider en quelque sorte la pénétration des dents de ces molettes 1, 2 dans la paroi de cette pièce 3.

Le brevet FR 2242174 SOUTHWESTERN INDUSTRIES INC décrit aussi une méthode de formage de cannelures sur des pièces de révolution, au moyen d'au-moins une molette comportant une denture à profit constant, molette qu'on fait rouler sur la paroi de la pièce, en vue de reproduire sur celle-ci le profit de denture de la molette. Selon cette méthode, au moment de l'entrée en contact du bord de formage denté de la molette avec la paroi de la pièce, la pression exercée par la molette doit être juste suffisante pour entraîner la pièce en rotation, en marquant seulement sur celle-ci une trace du contour de cette motette de formage. Selon ce brevet il n'y a pas lieu d'entraîner en rotation simultanément la ou les molette(s) de formage d'une part et la pièce à former d'autre part. Il suffit d'entraîner en rotation soit la pièce à former soit les molettes de formage. La pression initiale exercée par la ou les molette(s) sur la pièce au cours de l'opération de roulage (ou cylindrage) doit suffire pour entraîner la pièce à former ou les molettes si l'une ou les autres se trouve(n) libre(s) en rotation. Cette pression initiale doit donc suffire pour faire tourner la pièce à former ou bien les molettes de formage sans glissement relatif, pendant plusieurs tours de molettes, le serrage final n'étant atteint qu'ultérieurement.

Bien que les documents cités ne donnent pas d'exemples chiffrés il est connu que le formage à froid de dents ou de cannelures sur la paroi de pièces de révolution par roulage au moyen de molettes à profit évolutif donne les meilleurs résultats en ce qui concerne la précision des produits obtenus. Ceci s'explique par l'utilisation d'une distance entre axes fixe, et d'un calage efficace de la structure qui supporte les paliers de molettes contre un bâti très rigide. Les machines de ce type sont coûteuses vu leurs structures très lourdes et encombrantes et elles conviennent bien pour la production en grande série de pièces de petites dimensions. Le rapport élevé qui doit exister entre le diamètre des molettes à profit évolutif et celui des pièces est aussi un facteur qui fait obstacle à la réalisation de pièces de fortes dimensions au moyen de tels dispositifs.

Les dispositifs permettant le formage à froid de cannelures ou de dentures au moyen de molettes à profit constant ont une beaucoup plus grande souplesse d'utilisation. Les molettes à profit constant sont beaucoup moins coûteuses à réaliser que celles à profit évolutif. La possibilité de faire pénétrer leurs dents ou cannelures dans la paroi de révolution de la pièce à former, en diminuant progressivement la distance entre axes, permet de réduire de façon très importante la pression exercée. On effectue le même travail de déformation dans un temps plus long au cours de plusieurs tours de molettes au lieu de moins qu'un tour complet. Par contre, le déplacement perpendiculairement à leur axe des arbres porte-molette pour rapprocher tes molettes de la pièce à former est un facteur d'imprécision qui s'ajoute aux autres et contribue à l'obtention de résultats moins précis. De même, les conditions d'entrée en contact des molettes avec la pièce à former sont moins bien définies.

Le brevet FR-A-1 148 950 décrit un dispositif selon le préambule de la revendication 1.

Le document décrit aussi un procédé de formage de dents sur la paroi de révolution d'une pièce montée sur un arbre, dans lequel on met en oeuvre deux molettes de formage montées chacune sur un arbre porte-molette et munies de dents identiques à profil constant, les axes des arbres porte-molette étant disposés de façon symétrique par rapport à l'axe de l'arbre porte-pièce, cette symétrie étant conservée pendant la mise en oeuvre du procédé, procédé dans lequel on met en oeuvre des moyens d'entraînement des arbres porte-molette permettant de les faire tourner à même vitesse et dans lequel chacun des deux arbres porte-molette est apte à se déplacer transversalement, l'axe de l'arbre porte-pièce étant maintenu fixe dans le sens transversal et dans lequel on rapproche les axes des arbres porte-molette de l'axe de l'arbre porte-pièce jusqu'à pénétration des cannelures ou dents des molettes dans la paroi de la pièce jusqu'à une profondeur déterminée et dans lequel on relie chacun des deux arbres porte-molette à un arbre secondaire, des moyens permettant d'entraîner ces deux arbres secondaires à même vitesse, ces moyens comprenant au moins un moteur dont l'arbre primaire est relié directement ou indirectement aux deux arbres secondaires

On a recherché la possibilité de remédier aux inconvénients présentés par les dispositifs de formage à froid de dentures ou cannelures qui font appel à des molettes à profit constant, appliquées contre la paroi de révolution d'une pièce à former par roulage, par un procédé qui utilise la variation de la distance entre axes. Plus précisement on a recherché la possibilité de mettre au point un dispositif permettant la mise en oeuvre d'un procédé par lequel on peut réaliser des pièces dentées ou cannelées ayant la même précision que celles obtenues au moyen de dispositifs mettant en oeuvre des molettes à profit évolutif et effectuant le roulage de la pièce à former avec une distance entre axes des molettes constante.

Le dispositif et le procédé qui font l'objet de l'invention permettent d'atteindre ces résultats. Ce dispositif et ce procédé permettent de réaliser par formage à froid, au moyen de molettes à profit constant appliquées par roulage sur la paroi de révolution d'une pièce, des dents ou cannelures, réparties régulièrement à distance égale les unes des autres. Ces dents ou cannelures peuvent être parallèles à l'axe de la pièce ou inclinées d'un angle quelconque par rapport à celui-ci. Les profils de ces dents ou cannelures peuvent varier dans de très larges limites en fonction des utilisations. On peut donner, par exemple, à ces dents ou cannelures une inclinaison suffisante pour réaliser des filetages. Le dispositif suivant l'invention comprend deux molettes de formage identiques dont la périphérie comporte une même denture de formage à profit constant répartie sur 360°. Ces deux molettes sont lors du montage sur leur arbre respectif calées chacune en rotation dans une position angulaire donnée et leurs axes sont disposés symétriquement par rapport à l'axe de la pièce de révolution à former. Des moyens d'entraînement et de synchronisation permettent de faire tourner les deux arbres à vitesse instantanée égale et des moyens de réglage de la position angulaire d'un arbre porte-molette par rapport à l'autre permettent de mettre en concordance le marquage effectué sur la paroi de la pièce à former par les dents ou cannelures d'une molette avec celui effectué par les dents ou cannelures de l'autre motette.

Des moyens d'avance permettent de réduire la distance entre axes des deux arbres porte-molette pour faire entrer en contact les profits de formage des molettes avec la paroi de révolution de la pièce à former, réalisant ainsi un marquage initial sur la pièce comme indiqué plus haut. L'avance est ensuite poursuivie jusqu'à une distance déterminée correspondant à la profondeur de pénétration voulue des molettes dans la paroi de la pièce.

Suivant l'invention le dispositif comporte un moyen d'entraînement en rotation de la pièce à former qui permet de lui conférer une vitesse de rotation instantanée Vp, égale à la vitesse de rotation instantanée des molettes Vm multipliée par le rapport N1/N2, N1 étant le nombre de dents de chaque molette et N2 te nombre de dents qu'il s'agit de former sur la pièce.

Conformément au procédé suivant l'invention, on entraîne en rotation à la vitesse Vp, la pièce à former par roulage, avant l'entrée en contact des molettes avec la paroi de la pièce à former et on maintient cette vitesse de rotation durant tout ou partie du mouvement d'avance des molettes réduisant la distance entre les axes des deux arbres porte-molettes. Les vitesses instantanées Vm et Vp peuvent être constantes durant tout le formage de la pièce ou bien varier durant le formage, en fonction de la pénétration des molettes dans la pièce à former.

De préférence, un moyen de débrayage permet d'interrompre la liaison entre le moyen qui entraîne la pièce en rotation et celle-ci. On effectue, de préférence, cette interruption avant d'accroître la distance entre axes des arbres porte-molettes après achèvement de la pénétration des dents ou cannelures des molettes dans la paroi périphérique de la pièce, si cette interruption n'a pas été faite plus tôt.

Le calage angulaire de chaque motette sur l'arbre porte-molette qui l'entraîne en rotation est effectué avec grande précision, de préférence au moyen d'une denture frontale qui vient en prise, par poussée axiale, contre une denture correspondante solidaire de l'arbre. Avantageusement, ce calage angulaire est réalisé au moyen de deux bagues. Chacune de celles-ci comporte un bord frontal sur lequel se trouve une couronne de dents ou cannelures, orientées de l'intérieur vers l'extérieur, soit radialement soit avec une certaine conicité. Les deux couronnes dentées ou cannelées sont prévues pour s'emboîter les unes dans les autres avec un minimum de jeu. L'une des deux bagues est solidaire de la molette, par exemple par vissage sur une face frontale de celle-ci et t'autre de l'arbre porte-molette, par exemple par vissage sur un épaulement de celui-ci.

Bien entendu les puissances des moyens d'entraînement des molettes et de la pièce assurant les mouvements selon l'invention doivent être suffisantes pour garantir la stabilité de marche selon le rapport de vitesses requis pendant le formage de la pièce.

Suivant un mode particulier de réalisation, les deux arbres porte-molette sont entraînés en rotation par un seul moteur qui entraîne les arbres primaires de deux réducteurs dont les arbres secondaires sont reliés, chacun par une liaison articulée, à l'arbre porte-molette correspondant. De façon particulièrement avantageuse, un différentiel de calage est intercalé entre l'arbre primaire de l'un des deux réducteurs et l'arbre primaire relié au moteur qui entraîne également l'autre réducteur. Ces deux réducteurs ayant un même rapport de réduction entraînent leurs arbres secondaires à la même vitesse. Les arbres d'entrée et de sortie du différentiel de calage ont une même vitesse de rotation, seul leur calage angulaire peut être modifié en modifiant la position angulaire de ta couronne extérieure du système planétaire qui constitue le différentiel de calage. Un arbre de commande qui peut être entraîné par moteur, permet de modifier ce calage angulaire dans un sens ou dans l'autre.

De préférence, le moteur d'entraînement comporte un moyen de réglage et de contrôle de sa vitesse de rotation permettant d'ajuster celle-ci de façon précise. Ce moyen peut comprendre un variateur de vitesse. La liaison articulée entre l'arbre secondaire de chacun des réducteurs et l'arbre porte-molette correspondant est, de préférence, réalisée par un arbre télescopique dont les deux composants coulissant l'un dans l'autre sont bloqués en rotation l'un par rapport à l'autre, par exemple par des cannelures. Cet arbre télescopique est relié à l'arbre secondaire du réducteur et à l'arbre porte-molette par des joints articulés tels que des joints de cardan.

Au lieu d'un seul moteur d'entraînement, on peut utiliser deux moteurs entraînant chacun un réducteur. On réalise de préférence une liaison mécanique de synchronisation entre les arbres de ces moteurs pour assurer la synchronisation. Cette liaison est, de préférence, effectuée par un différentiel de calage disposé entre les prolongements des arbres primaires des deux réducteurs afin de pouvoir obtenir aisément le calage angulaire relatif des molettes.

Le moyen d'entraînement de chaque arbre porte-molette peut aussi être constitué par un moteur indépendant, la synchronisation des vitesses des deux arbres et le réglage du calage angulaire de l'un des arbres par rapport à l'autre étant assuré par une électronique spécialisée en soi connue reliant et commandant les deux moteurs.

La pièce à former peut être entraînée en rotation par l'arbre qui la supporte qui peut lui-même être entraîné par une transmission mécanique, une prise de mouvement étant effectuée sur le ou les moyens moteur qui entraînent les arbres porte-molettes. Un moyen de réglage de la vitesse, tel qu'un variateur ou une boîte de vitesse à rapports multiples et adaptables, est interposé pour permettre d'ajuster la vitesse de rotation de la pièce à former à la valeur voulue.

L'entraînement de la pièce à former peut aussi être effectué par un moteur indépendant qui fait tourner l'arbre sur lequel elle est montée par l'intermédiaire de moyens de réglage et de contrôle de vitesse et de transmission. Ces moyens de réglage et de contrôle de vitesse sont tels qu'ils permettent d'ajuster la vitesse Vp de rotation de la pièce à former, en fonction de la vitesse de rotation Vm des molettes pour satisfaire la relation Vp = Vm. N1/N2 .

De façon avantageuse les moyens moteur qui assurent l'entraînement en rotation des molettes de formage à une même vitesse instantanée Vm, comportent des variateurs de vitesse dont le fonctionnement est contrôlé par des moyens d'asservissement, afin de contrôler de façon automatique la vitesse Vm et de la maintenir à une valeur constante lorsque cela est nécessaire. De façon particulièrement avantageuse, le moyen moteur qui assure l'entraînement en rotation de la pièce à former, comporte un variateur de vitesse dont le fonctionnement est contrôlé par des moyens d'asservissement permettant de même de contrôler la vitesse instantanée Vp de façon qu'elle satisfasse la relation Vp = Vm.N1/N2 .

Chacun des arbres de molette est avantageusement muni de freins d'arbre en soi connus qui permettent de rattraper les jeux en rotation éventuels existants dans la chaîne de transmission du mouvement aux dits arbres de molette et de mettre en appui les outils par rapport à leur sens de rotation. Ces freins peuvent être commandables à distance et peuvent être mis en service ou non suivant la précision recherchée. Ces freins permettent de travailler avec la précision maximale en particulier au démarrage du formage des pièces.

De façon avantageuse tout en maintenant la vitesse instant née de la pièce selon l'invention, l'arbre de chacune des molettes est muni également de moyens d'orientation qui permettent d'incliner l'axe de cet arbre dans un plan perpendiculaire à l'axe de déplacement de la molette en direction de la pièce à déformer. Pour certaines applications on prévoit également un moyen permettant d'incliner l'axe de l'arbre porte-molette par rapport à l'axe de la pièce dans le plan qui contient ce dernier axe et qui est parallèle à l'axe de déplacement de la motette. Ces moyens d'orientation sont en soi connus et peuvent être constitués classiquement par exemple de plateaux orientables à deux degrés de liberté. Dans ce cas la vitesse instantanée des molettes n'est pas forcément constante mais les deux molettes ont une vitesse instantanée identique.

De tels moyens d'orientation permettent d'assurer le formage de pièces autres que cylindriques, par exemple de pièces coniques de révolution.

Chacun des arbres de molette est, de préférence, monté par ses paliers sur un chariot coulissant sur des glissières solidaires de la structure de base du dispositif et perpendiculaires à l'axe de la pièce à former. Au moins un vérin hydraulique est disposé par exemple au dessous des chariots et exerce par l'intermédiaire de sa tige de piston, de façon directe ou indirecte, l'effort de traction qui provoque l'avance des deux chariots l'un vers l'autre, d'un mouvement relatif, pour réduire la distance entre axes et provoquer l'entrée en contact de chaque motette de formage avec la paroi de révolution de la pièce à former.

L'avance des chariots peut être effectuée de façon symétrique, l'axe de La pièce à former demeurant fixe. Cette avance peut aussi être effectuée de façon relative, l'un des deux chariots demeurant fixe par rapport à la structure de base, l'axe de la pièce se déplaçant alors en même temps que te chariot mobile, à une vitesse déterminée pour qu'il reste à mi-distance des deux axes des arbres porte-molettes. L'avance, de façon symétrique, des deux chariots peut en particulier être réalisée au moyen du dispositif décrit dans le FR 1490722 qui synchronise l'action d'un vérin hydraulique. Le retour des chariots à la position initiale est effectué de façon identique.

De façon avantageuse, un moyen de programmation permet de déterminer les conditions d'avance des chariots en fonction des dimensions des molettes et des pièces ainsi que de celles des dents ou cannelures. Des moyens de butée permettent de limiter, de façon ajustable, l'avance des chariots.

De façon avantageuse, un moyen de translation permet de déplacer de façon relative la pièce en cours de formage le long de son axe par rapport aux molettes pour réaliser des dents ou cannelures sur une longueur supérieure à celle des molettes par la technique, connue en elle-même, du roulage en enfilade. Cette opération est avantageusement précédée d'un début de formage avec approche des molettes en direction de la pièce et engagement des dents ou cannelures jusqu'à la profondeur de travail prévu. Le déplacement en enfilade, combiné avec le roulage, est ensuite effectué à profondeur constante. De façon connue, le profil de chaque dent ou cannelure des molettes varie d'une extrémité à l'autre pour permettre le formage par cette méthode de travail en enfilade. L'avance de la pièce peut aussi résulter d'une inclinaison de l'axe des molettes par rapport à l'axe de la pièce comme cela a été expliqué précédemment.

De façon avantageuse, l'arbre porte pièce à former et ses moyens d'entraînement comprenant un moyen moteur et de transmission, sont fixés à un portique monté sur la structure de base du dispositif. Ce portique est articulé pour permettre de sortir l'ensemble comprenant l'arbre porte-pièce à former et ses moyens d'entraînement de l'espace étroit compris entre les deux arbres porte-molettes en donnant ainsi un accès direct pour les changements de pièce ou de molettes et pour toutes les interventions nécessaires sur les différentes lignes d'arbres. Un tel dispositif permet aussi de travailler sans entraînement de pièce, c'est à dire en roulage classique. On a alors un dispositif polyvalent. Suivant un mode particulier de réalisation du portique, celui-ci comporte des glissières, disposées, parallèlement à l'axe de l'arbre porte pièce à former, sur lesquelles coulisse l'ensemble arbre porte pièce à former et ses moyens d'entraînement monté par exemple sur un chariot. Un moyen de translation à vitesse contrôlée permet de faire glisser le chariot sur ces glissières. Ce moyen peut être un moteur, par exemple hydraulique, qui entraîne un pignon engrenant sur une crémaillère. On peut former ainsi des cannelures ou dentures sur des pièces, par roulage en enfilade, comme précisé plus haut, le mouvement de rotation de la pièce se combinant avec un coulissement de la pièce à former le long de son axe.

Bien entendu on peut concevoir le montage de l'arbre porte-pièce à former et de ses moyens d'entraînement autrement que sous forme d'un portique. Même quand il n'existe pas de portique le dispositif peut avantageusement comporter un moyen de conférer à la pièce une translation parallèlement à son axe.

On peut à titre de variante pour mettre en oeuvre le procédé selon l'invention, utiliser comme pièces ébauches des pièces de révolution dont une au moins des extrémités comporte, dans la zone qui correspondra pendant le formage à la zone d'action du bord de la molette selon son axe, un léger épaulement annulaire. Les dimensions de cet épaulement annulaire correspondront avantageusement à une surépaisseur radiale comprise entre 0,2 et 0,7 mm et à une extension axiale totale comprise entre 1 et 5 mm, la forme de cet épaulement pouvant par exemple être triangulaire ou rectangulaire.

Un tel épaulement facilite le formage de la pièce au début de la pénétration des cannelures ou dents des molettes dans la pièce et favorise la stabilité de la vitesse de rotation de la pièce Vp.

L'exemple et tes figures ci-après décrivent, de façon non limitative des modes particuliers de réalisation du dispositif et des modes particuliers de mise en oeuvre du procédé suivant l'invention.

La figure 1 est une vue schématique de dessus du dispositif de formage à froid suivant l'invention et de ses moyens d'entraînement.

La figure 2 est une vue agrandie d'un arbre de transmission articulé de la figure 1.

La figure 3 est une coupe suivant A-A de la figure 2 considérablement agrandie.

La figure 4 est une vue d'une molette du dispositif suivant l'invention comportant un moyen particulier de calage angulaire sur l'arbre porte-molette.

La figure 5 est une vue de l'arbre porte-molette adapté pour recevoir la molette de la figure 4.

La figure 6 est une vue de dessus d'un moyen d'avance symétrique utilisé pour actionner les chariots porte-molette du dispositif suivant l'invention en position de recul.

La figure 7 est une vue du dispositif de la figure 6 en position d'avance.

La figure 8 est une vue, en élévation, de l'arbre porte-pièce du dispositif suivant l'invention et de ses moyens d'entraînement.

La figure 9 est une vue, en élévation, d'un portique basculant suivant l'invention permettant de soulever l'arbre porte-pièce et ses moyens d'entraînement.

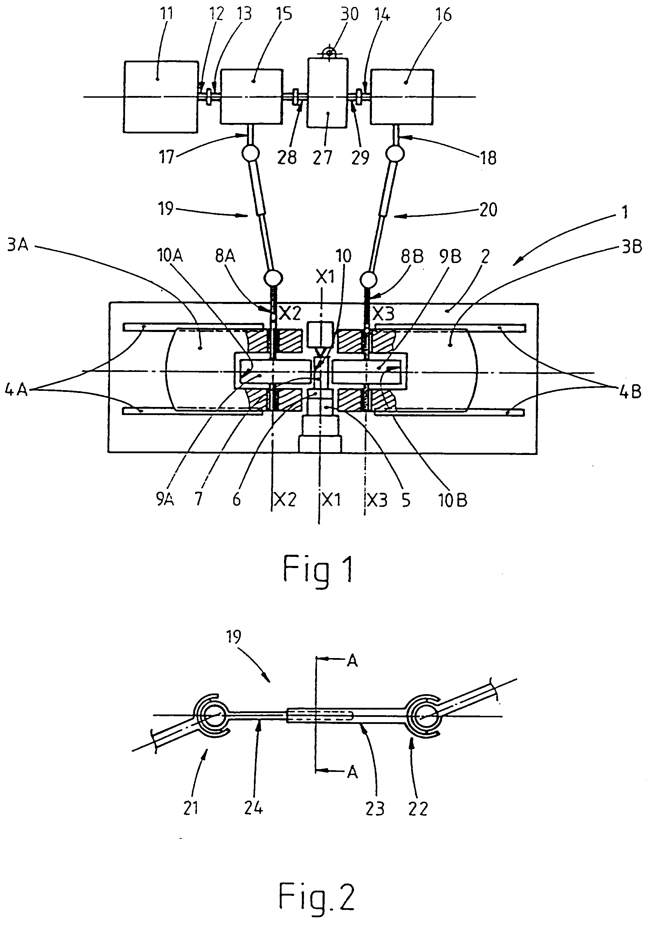

La figure 1 est une vue schématique en plan montrant dans son ensemble un dispositif qui comporte les moyens suivant l'invention et permet la mise en oeuvre du procédé suivant l'invention.

Le dispositif 1 suivant l'invention comprend une structure de base 2 sur laquelle sont placés deux chariots 3A, 3B aptes à coulisser sur des glissières 4A, 4B perpendiculaires à l'axe X1 - X1 de l'arbre porte-pièce 5. Cet arbre porte-pièce 5 comporte une tête de fixation 6 de la pièce de révolution 7 à former. Cette tête de fixation est équipée de mâchoires non représentées dont le serrage hydraulique est commandé par des moyens connus non représentés. Les moyens moteur qui assurent l'entraînement le réglage et le contrôle de la vitesse de rotation de l'arbre porte-pièce 5 sont disposés au dessus de celui-ci et non représentés sur cette vue schématique.

Les arbres porte-molettes 8A, 8B sont montés sur des paliers fixés respectivement sur les faces frontales des chariots 3A, 3B. Les molettes à profil constant 9A, 9B, identiques, sont montées sur les arbres 8A, 8B afin d'être entraînées en rotation autour des axes X2-X2, X3-X3 dans le même sens. Ainsi l'avance des chariots 3A, 3B le long des glissières 4A, 4B en direction de l'axe X1-X1 permet aux molettes 9A, 9B de venir en contact avec la paroi de révolution 10 de la pièce 7 et de former sur celle-ci, par roulage, un profil correspond au profil constant que comportent les surfaces périphériques 10A, 10B de ces molettes.

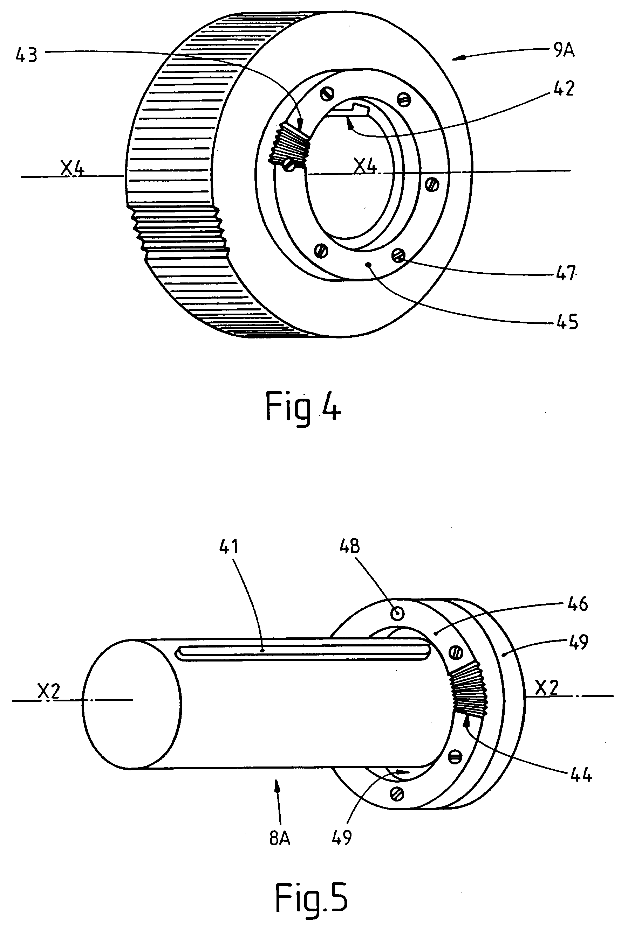

Comme le montre la figure 1 les arbres porte-molette 8A, 8B, sont entraînés par un moteur unique 11 dont l'arbre 12 entraîne les arbres primaires 13, 14 des réducteurs 15, 16. Ceux-ci entraînent à leur tour, par leurs arbres secondaires 17, 18 des arbres télescopiques articulés 19, 20 qui sont reliés aux lignes d'arbres porte-molette 8A, 8B. Comme le montre la figure 2 chacun des arbres télescopiques tel que 19 comporte deux tronçons 23, 24 coulissant l'un dans l'autre tout en étant calés en rotation l'un par rapport à l'autre, comme le montre la coupe A-A fortement agrandie suivant figure 3. Ce calage est assuré par les cannelures longitudinales en relief telles que 25 qui s'engagent dans les cannelures en creux telles que 26. En général le nombre de cannelures telles que 25/26 est plus important que ce qui ressort de la figure 3 donnée à titre purement schématique. Aux deux extrémités de chacun de ces deux arbres des joints articulés de type cardan tels que 21, 22 assurent la liaison avec les arbres correspondants, 17, 8A ou 18, 8B, les arbres secondaires 17, 18 étant parallèles aux arbres porte-molettes 8A, 8B afin d'assurer une vitesse régulière aux arbres 8A, 8B.

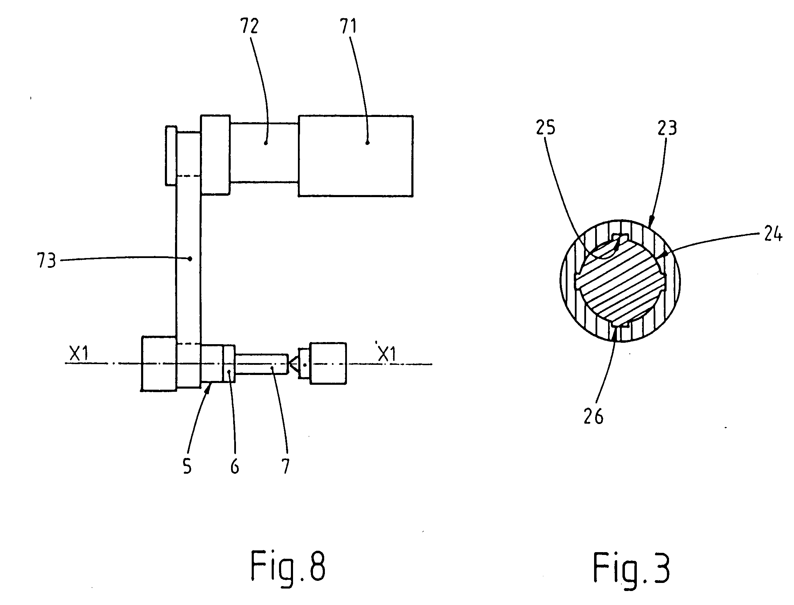

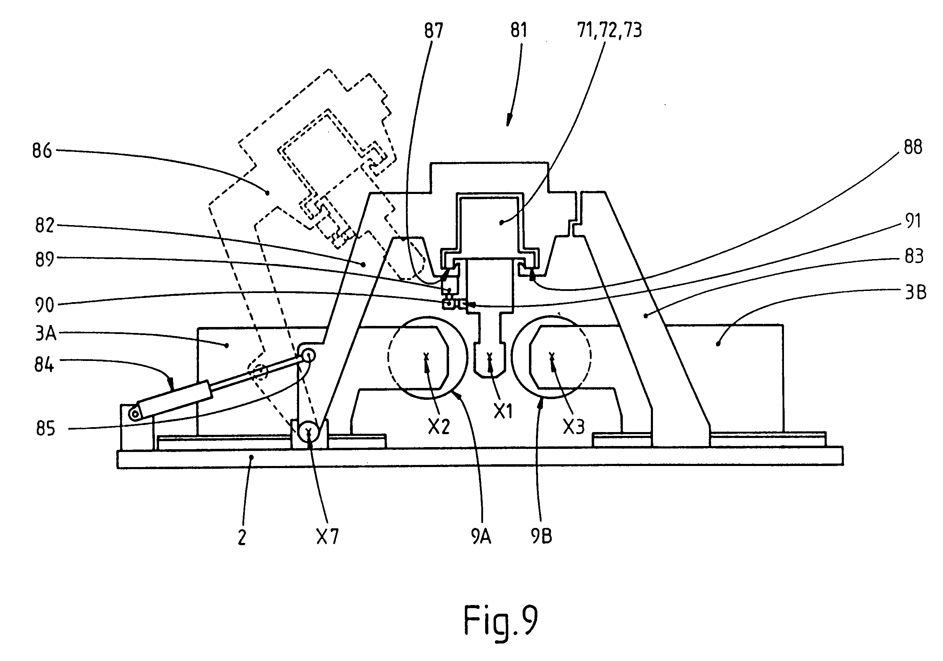

Afin d' ajuster le calage angulaire des molettes 9A, 9B les arbres primaires 13, 14 qui entraînent les réducteurs 15, 16 sont reliés l'un à l'autre par un différentiel de calage 27 dont les arbres d'entrée 28 et de sortie 29 ont un rapport de vitesse égal à l'unité. Un arbre de commande 30 qui fait varier la position angulaire de la couronne extérieure de ce différentiel planétaire de type connu permet de modifier le calage angulaire de l'un des arbres porte-molette par rapport à l'autre. Ce différentiel permet donc d'ajuster le calage angulaire initial avant le début de l'opération de roulage des molettes 9A, 9B afin qu'elles pénètrent successivement dans les mêmes traces formées par la molette précédente à condition que la nièce soit entraînée en rotation à la vitesse voulue. Pour cela, on traîne la pièce à former 7 grâce à un moyen moteur 71 (voir figure 8) associé à un réducteur 72 ainsi qu'à des moyens de transmission, par exemple par courroie crantée 73, ces moyens étant disposés au dessus de l'arbre porte-pièce 5 et supportés de façon non représentée par un portique (voir figure 9) non représenté également. Le réglage de la vitesse peut de façon connue se faire par un variateur et un calculateur spécialisé non représentés affectés au moyen moteur 71. Ces moyens d'entraînement et de réglage permettent de donner à l'arbre porte-pièce 5 une vitesse de rotation instantanée Vp égale à la vitesse instantanée Vm de chacun des porte-molettes multipliée par le rapport N1/N2, N1 étant le nombre de dents ou cannelures de chaque molette et N2 étant le nombre de dents ou cannelures qu'on se propose de réaliser sur la pièce, en tenant compte de son diamètre et de celui des molettes.

Il est nécessaire, pour former des profils de précision sur les pièces, de réduire au minimum le jeu des portées et des transmissions et en particulier le jeu en rotation entre les molettes et les arbres qui les portent. Les figures 4 et 5 montrent un mode particulier de réalisation de la liaison entre arbre et molette, permettant d'obtenir un calage angulaire de chaque molette sur l'arbre qui l'entraîne, parfaitement sûr précis et reproductible. Comme le montrent figures 4 et 5, chaque molette telle que 9A comporte à sa périphérie un ensemble de dents ou cannelures, les deux termes étant équivalents. Cette molette est alésée à un diamètre permettant son engagement autour de l'arbre porte-molette 8A avec le minimum de jeu nécessaire pour pouvoir la glisser jusqu'à son emplacement. Cet arbre comporte une clavette fixe 41 utilisée pour le montage de molettes de type particulier, telles que des molettes pour réalisation de filetages ne nécessitant pas une précision angulaire aussi grande.

L'alésage de la molette 9A comporte un passage de clavette 42 ayant un jeu suffisant pour que la présence de la clavette 41 ne fasse pas obstacle au calage angulaire, de grande précision, réalisé au moyen des dentures ou cannelures frontales 43, 44 des bagues 45, 46. Les arêtes de ces dents ou cannelures sont dans des plans radiaux contenant l'axe de la bague et disposées en couronne sur une face frontale de chaque bague 45, 46 perpendiculairement à son axe. La bague 45 est fixée avec précision sur la molette 9A par une série de vis telles que 47, afin que son propre axe se confonde avec l'axe de molette X4-X4. La deuxième bague 46, identique à la première, est fixée par une série de vis, telles que 48, sur un épaulement 49 de l'arbre porte-molette 8A afin que son axe se confonde avec l'axe X2-X2 de cet arbre porte-molette. Le maintien en prise des deux dentures frontales 43, 44 est obtenu en exerçant sur la molette 9A une poussée axiale en direction de la bague 46 solidaire de l'arbre 8A par un moyen convenable, non représenté, tel qu'un manchon qui peut, par exemple, être vissée sur l'arbre.

Le déplacement symétrique des chariots 3A et 3B sur les glissières 4A et 4B est obtenu au moyen d'un vérin hydraulique disposé au dessous des chariots. Le cylindre du vérin est solidaire de l'un des deux chariots et la tige du piston agit, de façon directe ou indirecte sur l'autre.

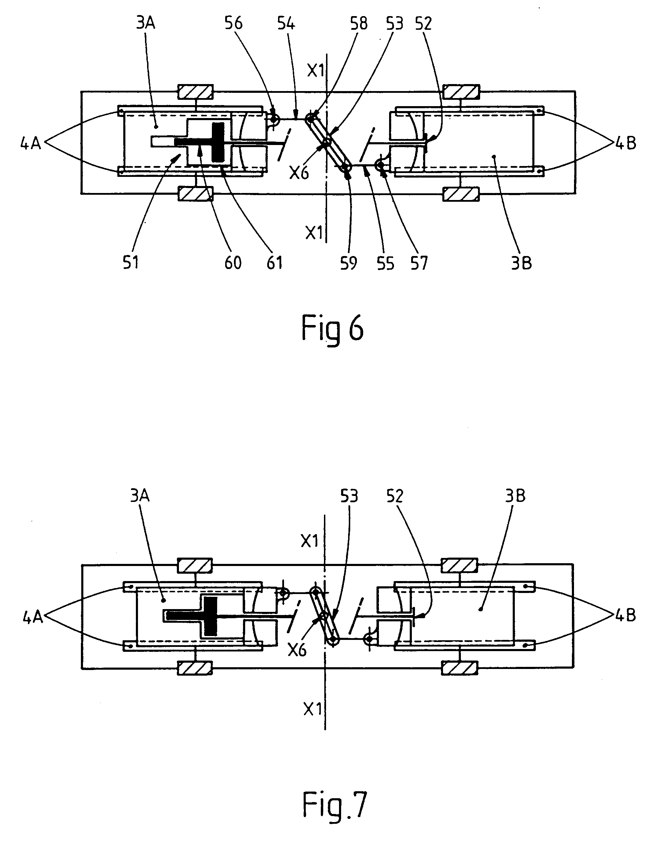

Les figures 6 et 7 montrent, de façon purement schématique, un mode d'entraînement permettant une avance symétrique des deux chariots 3A, 3B qui portent par l'intermédiaires de paliers les arbres porte-molette d'axe X2-X2 et X3-X3, non représentés, par rapport à l'axe X1-X1 de l'arbre porte-pièce à former.

On voit sur ces figures 6 et 7 le vérin 51 solidaire du chariot 3A dont l'extrémité de la tige de piston 52 est solidaire du chariot 3B. Une poutre basculante rigide 53 est montée en rotation autour d'un pivot d'axe vertical X6 qui intersecte l'axe X1-X1. Deux bras rigides 54, 55 sont reliés par des pivots 56, 57 d'axe vertical aux extrémités des chariots 3A et 3B par une de leurs extrémités et par l'autre à la poutre basculante en 58 et 59. On voit que cette disposition, connue dans son principe, permet un déplacement symétrique des deux chariots 3A et 3B sur les glissières 4A et 4B.

Par ailleurs, des moyens de butée non représentés, comportant une servo-valve électro-hydraulique, permettent de piloter le mouvement d'avance des chariots jusqu'à la côte finale avec une grande précision. Comme le montrent les figures 6, 7, le vérin comporte un piston de section réduite 60 qui permet un retour rapide en position écartée des deux chariots. Ce piston 60 se trouve dans le prolongement du piston haute pression 61 qui assure l'avance. A la place du piston 60, on pourrait concevoir d'utiliser un vérin de rappel de faible section distinct du vérin 51 assurant le rapprochement des deux chariots 3A, 3b.

Exemple de réalisation d'un pignon d'engrenage à denture droite au moyen du dispositif ainsi décrit.

On met en oeuvre une pièce à former en acier, à paroi de révolution de 32 mm de diamètre et une paire de molettes de formage de 240 mm de diamètre et 45 mm de largeur. Ces molettes comportent une denture droite comprenant 225 dents en développante-module 1,058 angle de pression 37°30.

On entraîne les arbres porte-molette à une vitesse constante Vm de 20 t/min et on règle la vitesse constante Vp de l'arbre porte-pièce à 150 t/min suivant la relation Vp = Vm . N1/N2 afin de former 30 dents sur le pourtour de la pièce. On effectue un temps de roulage de 8 à 10 secondes compris entre l'instant d'entrée en contact des molettes avec la pièce et celui auquel, après avoir stoppé l'avance des chariots qui portent les arbres porte-molette et débrayé l'entraînement de la pièce, on ramène ces chariots à leur position de départ. On mesure alors sur la pièce chacune des 30 cotes de dents groupées 7 dents par 7 dents et on constate que la différence entre la cote maximale et la cote minimale n'est pas supérieure à 0,05 mm alors que l'écart courant sur machine classique est de 0,10 mm.

Suivant un mode particulier de réalisation, l'arbre 5 porte-pièce qui entraîne la pièce à former 7 et les moyens moteur 71, 72 ainsi que les moyens de transmission 73 disposés au-dessus de cet arbre porte-pièce (voir figure 8), sont fixées à un portique 81 (voir figure 9) monté sur la structure de base 2 du dispositif. Ce portique dont seule la partie avant est représenté, comporte deux montants 82 et 83. Une deuxième partie du portique comportant une même structure se trouve en arrière au delà des chariots 3A, 3B. Le montant 83 est fixe tandis que le montant 82 est articulée autour d'un axe X7 parallèle à l'axe X1 de l'arbre 5 porte-pièce. Cet axe X7 est monté sur un palier fixé sur la structure de base 2. Un vérin 84 prenant appui sur la structure de base 2 et articulé sur le montant 82 au point 85 permet de faire tourner celui-ci autour de X7 en dégageant ainsi l'ensemble comprenant l'arbre 5 porte-pièce, la pièce à former 7 et les moyens moteur et de transmission 71, 72, 73.

On voit en tirets en 86 le montant 82 du portique en position inclinée par traction au moyen du vérin auquel sont reliés l'arbre 5 porte-pièce et ses moyens d'entraînement 71, 72, 73.

On voit également que le portique 81 comporte des glissières 87, 88 qui permettent de faire coulisser l'ensemble arbre 5 porte-pièce et moyens moteur 71, 72 et de transmission 73, suivant l'axe X1-X1. Un moteur hydraulique 89 engrenant par un pignon 90 sur une crémaillère 91 permet d'effectuer ce glissement. Il est ainsi possible de former des pièces en combinant le mouvement de rotation des molettes de formage 9A, 9B avec le coulissement de la pièce à former 7 le long de l'axe X1-X1 par la méthode de travail en enfilade décrite plus haut.

De très nombreuses modifications peuvent être apportés au dispositif et au procédé qui font l'objet de l'invention sans sortir du domaine de celle-ci.

## Revendications

1. Dispositif permettant le formage à froid de cannelures ou dents sur la paroi de révolution (10) d'une pièce (7) comprenant deux molettes (9A, 9B) de formage munies de mêmes cannelures ou d'une même denture, à profil constant, disposées de part et d'autre de la pièce et calées chacune en rotation sur un arbre (8A, 8B) les axes (X2-X2, X3-X3) des molettes étant disposées symétriquement par rapport à l'axe (X1-X1) de la pièce, des moyens d'entraînement permettant de faire tourner les arbres (8A, 8B) à même vitesse, la pièce à former étant entrainée en rotation par un moyen d'entraînement chacun des deux arbres (8A, 8B) étant monté sur des paliers solidaires de chariots (3A 3B) aptes à se déplacer transversalement, des moyens de synchronisation maintenant les axes (X2-X2, X3-X3) des arbres porte-molette (8A, 8B) à égale distance de l'axe (X1-X1) de l'arbre porte-pièce (5) fixe dans le sens transversal, un moyen d'avance permettant de réduire la distance entre axes des deux molettes, par déplacement des chariots, afin que ces deux molettes pénètrent dans la paroi de la pièce jusqu'à une profondeur déterminée, chacun des deux arbres porte-molette (8A, 8B) étant relié à un arbre secondaire (17, 18), ces deux arbres secondaires étant entraînés à vitesse égale par au moins un arbre primaire (12), entrainé par au moins un moteur (11), grâce à des moyens de transmission, caractérisé en ce que ces moyens de transmission comprennent un différentiel de mise en concordance (27) permettant d'ajuster la concordance d'un arbre porte-molette (8A) par rapport à l'autre arbre porte molette (8B) et en ce que chaque molette (9A) est solidarisée avec son arbre porte-molette (8A) par un moyen de calage angulaire de grande précision constitué par une denture ou cannelure frontale (43) solidaire de la molette apte à s'engager dans une denture ou cannelure correspondante (44) solidaire de l'arbre (8A), et en ce que des freins d'arbre sont aptes à réaliser un freinage de chaque arbre porte-molette afin d'assurer le rattrapage des jeux existants, au niveau de chaque arbre porte-molette, et en ce qu'un moyen d'entraînement en rotation (71, 72) de la pièce (7) à former, autour de son axe (X1-X1), permet de lui conférer une vitesse de rotation instantanée Vp telle que $Vp = Vm\, N1/N2$, Vm étant la vitesse de rotation instantanée de chaque molette, N1 le nombre de cannelures ou dents de chaque molette et N2 le nombre de cannelures ou dents à former sur la pièce.

2. Dispositif suivant la revendication 1 caractérisé en ce que le moyen de calage angulaire de chaque molette par denture ou cannelure frontale comporte deux bagues (45, 46), l'une solidarisée avec la molette (8A) et l'autre avec l'arbre porte-molette (9A) les dentures ou cannelures frontales (43, 44) de ces deux bagues, centrées sur l'axe (X2-X2) de l'arbre porte-molette, étant aptes à s'engager l'une dans l'autre par poussée axiale.

3. Dispositif suivant revendication 1 ou 2 caractérisé en ce que chaque arbre (19) qui assure une liaison entre un arbre d'entraînement secondaire (17) et l'arbre porte-molette (8A) correspondant est télescopique et comporte deux tronçons coulissant (23, 24) l'un dans l'autre, calés en rotation par des cannelures longitudinales, (25, 26) ces deux tronçons se raccordant par des joints articulés, (21, 22) l'un à l'arbre d'entraînement secondaire (17) et l'autre à l'arbre porte-molette (8A).

4. Dispositif suivant l'une des revendications 1 à 3 caractérisé en ce que les moyens de synchronisation maintenant les axes des arbres porte-molette à égale distance de l'arbre porte-pièce comprennent une poutre basculante (53) montée sur un pivot d'axe vertical (X6) et des tiges rigides articulées (54, 55) reliées chacune à un chariot (3A, 3B) par une extrémité et aux extrémités (58, 59) de la poutre basculante, par l'autre.

5. Dispositif suivant l'une des revendications 1 à 4 caractérisé en ce que le moyen d'avance permettant de rapprocher les molettes de la pièce à former et de les faire pénétrer dans la paroi de cette pièce jusqu'à une profondeur déterminée est un vérin hydraulique (51) comportant un cylindre solidaire de l'un des deux chariots (3A) muni d'un piston d'avance (61) lequel comporte une tige (52) reliée à l'autre chariot, la poussée hydraulique exercée sur ce piston provoquant le rapprochement des deux chariots (3A, 3B) l'un de l'autre et donc de l'axe (X1-X1) de l'arbre porte-pièce (5).

6. Dispositif suivant l'une des revendications 1 à 5 caractérisé en ce que le moyen d'entraînement de l'arbre porte-pièce (5) est un moteur à vitesse règlable (71) associé à des moyens de transmission (73).

7. Dispositif suivant l'une des revendications 1 à 6 caractérisé en ce que les moteurs qui assurent l'entraînement en rotation des arbres porte-molette et de l'arbre porte-pièce comportent des variateurs de vitesse dont le fonctionnement est contrôlé par des moyens d'asservissement permettant de maintenir le rapport de vitesse de rotation défini par la relation $Vp = Vm.N1/N2$ .

8. Dispositif suivant l'une des revendications 1 à 7 caractérisé en ce qu'il comporte au moins un moyen d'orientation de l'axe de chaque arbre porte-molette dans un plan perpendiculaire à l'axe de déplacement de la molette en direction de la pièce à déformer par roulage.

9. Dispositif suivant l'une des revendications 1 à 8 caractérisé en ce qu'il comporte au moins un moyen d'orientation de l'axe de chaque arbre porte-molette dans le plan contenant l'axe de la pièce à déformer qui est parallèle à l'axe de déplacement de la molette en direction de cette pièce à déformer.

10. Dispositif suivant revendication 8 ou 9 caractérisé en ce que le moyen d'orientation de l'axe de l'arbre porte-molette est un plateau orientable `à deux degrés de liberté.

11. Dispositif suivant l'une des revendications 1 à 10 caractérisé en ce qu'il comprend un moyen de translation, moyen moteur (89) permettant de faire coulisser la pièce à former (7) le long de son axe (X1-X1), pendant qu'elle est soumise à l'action des molettes, pour effectuer un formage en enfilade.

12. Dispositif suivant l'une des revendications 1 à 11 caractérisé en ce que le moteur d'entraînement (71) de l'arbre porte-pièce (5) à former ainsi que le réducteur de vitesse (72) sont disposés au-dessus de l'arbre porte-pièce, l'ensemble ainsi réalisé étant solidaire d'une structure formant portique (81) placée au-dessus des axes des arbres porte-molette et comportant des appuis sur la structure de base du dispositif laissant libre le passage des chariots.

13. Dispositif suivant revendication 12 caractérisé en ce que le portique (81) comporte un montant articulé (82) qui permet de relever au-dessus des chariots l'ensemble comprenant l'arbre (5) porte-pièce ainsi que ses moyens moteur (71, 72) et de transmission (73).

14. Dispositif suivant revendication 12 ou 13 caractérisé en ce que le portique (81) comporte des glissières (87, 88) permettant un déplacement de l'arbre porte-pièce (5) et des moyens moteur (71, 72) et de transmission (73) suivant l'axe X1-X1 grâce à un moyen moteur (89) permettant d'animer ces glissières d'un mouvement de translation parallèlement à l'axe de la pièce (X1-X1).

15. Procédé de formage à froid de cannelures ou dents sur la paroi de révolution d'une pièce (7) montée sur un arbre (5), dans lequel on met en oeuvre deux molettes (9A, 9B) de formage montées chacune sur un arbre porte-molette (8A, 8B) et munies de cannelures ou dents identiques à profil constant, les axes (X2-X2, X3-X3) des arbres porte-molette étant disposés de façon symétrique par rapport à l'axe (X1-X1) de l'arbre porte-pièce (5), cette symétrie étant conservée pendant la mise en oeuvre du procédé, procédé dans lequel on met en oeuvre des moyens d'entraînement des arbres porte-molette permettant de les faire tourner à même vitesse et dans lequel chacun des deux arbres porte-molette est apte à se déplacer transversalement, l'axe de l'arbre porte-pièce étant maintenu fixe dans le sens transversal et dans lequel on rapproche les axes des arbres porte-molette de l'axe de l'arbre porte-pièce (5) jusqu'à pénétration des cannelures ou dents des molettes dans la paroi (10) de la pièce (7) jusqu'à une profondeur déterminée et dans lequel on relie chacun des deux arbres porte-molette (8A, 8B) à un arbre secondaire (17, 18), des moyens permettant d'entraîner ces deux arbres secondaires à même vitesse avec un calage angulaire déterminé de l'un par rapport à l'autre, ces moyens comprenant au moins un moteur (11) dont l'arbre (12) primaire est relié directement ou indirectement aux deux arbres secondaires, un différentiel (30) permettant de faire varier ledit calage angulaire et permettant ainsi de régler la concordance d'un arbre porte-molette par rapport à l'autre, chaque molette étant solidarisée avec l'arbre porte-molette sur lequel elle est montée par un moyen de calage angulaire de grande précision constitué par une denture ou cannelure frontale solidaire de la molette apte à s'engager dans une denture ou cannelure correspondante solidaire de l'arbre porte-molette, des moyens de freinage de chaque arbre porte-molette permettant d'éliminer les jeux et des moyens moteur permettant l'entraînement en rotation de la pièce à former (7), la vitesse de rotation des molettes et de la pièce à former étant ajustée de façon que la vitesse instantanée Vp de la pièce soit égale à Vm.N1/N2, relation dans laquelle Vm est la vitesse de rotation instantanée de chaque molette, N1 le nombre de cannelures ou dents de chaque molette et N2 le nombre de cannelures ou dents à former sur la pièce.

16. Procédé suivant revendication 15 caractérisé en ce que les vitesses instantanées Vp et Vm sont constantes pendant la période de pénétration.

17. Procédé suivant revendication 15 caractérisé en ce que durant la période de pénétration la pièce (7) tournant à vitesse Vp est entrainée en mouvement le long de son axe de révolution (X1-X1).

18. Procédé suivant revendication 15 caractérisé en ce que le formage des pièces est effectué à partir d'ébauches de révolution comportant un léger épaulement annulaire.

19. Procédé suivant revendication 18 caractérisé en ce que la surépaisseur radiale de l'épaulement annulaire est comprise entre 0,2 et 0,7 mm et son extension axiale est comprise entre 1 et 5 mm.

## Claims

1. An apparatus permitting the cold forming of grooves or teeth on the revolving wall (10) of a part (7), comprising two forming milling wheels (9A, 9B), provided with the same grooves or the same toothed configuration, of constant profile, and arranged on either side of the part, and each being keyed in rotation on a shaft (8A, 8B), the axes (X2-X2, X3-X3) of the milling wheels being disposed symmetrically in relation to the axis (X1-X1) of the part, driving means making it possible to rotate the shafts (8A, 8B) at the same speed, the part to be formed being rotated by a driving means, each of the two shafts (8A, 8B) being mounted on bearings integral with carriages (3A, 3B) capable of moving transversely, synchronisation means keeping the axes (X2-X2, X3-X3) of the milling wheel-holding shafts (8A, 8B) at equal distances from the axis (X1-X1) of the part-holding shaft (5) which is fixed in the transverse extent, an advance means making it possible to reduce the distance between the axes of the two milling wheels by displacement of the carriages in order that those two milling wheels penetrate to a given depth into the wall of the part, each of the two milling wheel-holding shafts (8A, 8B) being connected to a secondary shaft (17, 18), those two secondary shafts being driven at equal speeds by at least one primary shaft (12) which is driven by at least one motor (11) by virtue of transmission means, characterised in that these transmission means comprise a keying differential gear (27) permitting the adjustment of the keying of a milling wheel-holding shaft (8A) in relation to the other milling wheel-holding shaft (8B), and in that each milling wheel (9A) is fixed to its milling wheel-holding shaft (8A) by way of a highly accurate angular keying means constituted by a frontal toothed configuration or frontal groove (43) fixed to the milling wheel and capable of engaging into a corresponding toothed configuration or groove (44) fixed to the shaft (8A), and in that the brake shafts are capable of braking each milling wheel-holding shaft in order to compensate for existing play at the level of each milling wheel-holding shaft, and in that a means (71,72) for rotationally driving the part (7) to be formed about its axis (X1-X1) enables an instantaneous rotational speed Vp to be imparted thereto such that $Vp = Vm \, N1/N2$, Vm being the instantaneous rotational speed of each milling wheel, N1 being the number of grooves or teeth on each milling wheel, and N2 being the number of grooves or teeth to be formed on the part.

2. An apparatus according to Claim 1, characterised in that the angular keying means of each milling wheel in the form of a frontal toothed configuration or groove comprises two rings (45, 46), one of which is integral with the milling wheel (8A) and the other of which is integral with the milling wheel-holding shaft (9A), the frontal toothed configurations or grooves (43, 44) of these two rings being centred on the axis (X2-X2) of the milling wheel-holding shaft and being capable of engaging one into the other by axial thrust.

3. An apparatus according to Claim 1 or Claim 2, characterised in that each shaft (19) which provides a connection between a secondary drive shaft (17) and the corresponding milling wheel-holding shaft (8A) is telescopic and comprises two portions which slide (23, 24) into each other and which are keyed in rotation by longitudinal grooves (25, 26), these two portions being joined by means of articulated joints (21, 22), one to the secondary drive shaft (17) and the other to the milling wheel-holding shaft (8A).

4. An apparatus according to one of Claims 1 to 3, characterised in that the synchronisation means keeping the axes of the milling wheel-holding shafts at equal distances from the part-holding shaft comprise a rocking beam (53) which is mounted on a pivot of a vertical axis (X6) and articulated rigid rods (54, 55) each of which is connected at one end to a carriage (3A, 3A) and at the other end to the ends (58, 59) of the rocking beam.

5. An apparatus according to one of Claims 1 to 4, characterised in that the forward motion means which enable the milling wheels to be brought towards the part to be formed and to penetrate to a given depth into the wall of that part is a hydraulic jack (51) comprising a cylinder which is integral with one of the two carriages (3A) and provided with a forward motion piston (61) which comprises a rod (52) connected to the other carriage, the hydraulic thrust exerted upon that piston causing the two carriages (3A, 3B) to be brought towards each other, and thus towards the axis (X1-X1) of the part-holding shaft (5).

6. An apparatus according to one of Claims 1 to 5, characterised in that the drive means of the part-holding shaft (5) is a variable speed motor (71) associated with transmission means (73).

7. An apparatus according to one of Claims 1 to 6, characterised in that the motors which rotatably drive the milling wheel-holding shafts and the part-holding shaft comprise speed changing means, operation of which is governed by control means making it possible to maintain the rotational speed ratio as defined by the ratio $Vp = Vm.N1/N2$ .

8. An apparatus according to one of Claims 1 to 7, characterised in that it comprises at least one means for orienting the axis of each milling wheel-holding shaft in a plane perpendicular to the axis of displacement of the milling wheel in the direction of the part to be deformed by rolling.

9. An apparatus according to one of Claims 1 to 8, characterised in that it comprises at least one means for orienting the axis of each milling wheel-holding shaft in the plane which contains the axis of the part to be deformed which is parallel to the axis in which the milling wheel is displaced towards the part to be deformed.

10. An apparatus according to Claim 8 or 9, characterised in that the orientation means of the axis of the milling wheel-holding shaft is a plate which can be oriented with 2 degrees of freedom.

11. An apparatus according to one of Claims 1 to 10, characterised in that it comprises a translation means, a motor means (89) which make it possible to slide the part (7) to be formed along its axis (X1-X1) whilst it is being subjected to the action of the milling wheels, in order to carry out successive forming.

12. An apparatus according to one of Claims 1 to 11, characterised in that the drive motor (71) of the shaft (5) for holding the part to be formed and also the speed reducing gear (72) are disposed above the part-holding shaft, the assembly thus formed being integral with a structure forming a gantry (81) which is placed above the axes of the milling wheel-holding shafts and which comprises supports on the base structure of the apparatus to allow free passage of the carriages.

13. An apparatus according to claim 12, characterised in that the gantry (81) comprises an articulated upright (82) which enables the assembly comprising the part-holding shaft (5) and also its motor means (71, 72) and transmission means (73) to be raised above the carriages.

14. An apparatus according to Claim 12 or 13, characterised in that the gantry (81) comprises slides (87, 88) permitting displacement of the part-holding shaft (5) and the motor means (71, 72) and transmission means (73) along the axis X1-X1 by virtue of a motor means (89) permitting the slides to be imparted with a translatory movement parallel to the axis (X1-X1) of the part.

15. A process for the cold forming of grooves or teeth on the revolving wall of a part (7) mounted on a shaft (5), wherein two forming milling wheels (9A, 9B) are used, each of which is mounted on a milling wheel-holding shaft (8A, 8B) and provided with identical grooves or teeth with a constant profile, the axes (X2-X2, X3-X3) of the milling wheel-holding shafts being disposed symmetrically in relation to the axis (X1-X1) of the part-holding shaft (5), this symmetry being kept during realisation of the process, in which process means are used for driving the milling wheel-holding shafts to enable them to rotate at the same speed, and in which each of the two milling wheel-holding shafts is capable of transverse displacement, the axis of the part-holding shaft being kept fixed in the transverse direction, and in which the axes of the milling wheel-holding shafts are brought towards the axis of the part-holding shaft (5) until the grooves or teeth of the milling wheels penetrate to a given depth into the wall (10) of the part (7), and in which each of the two milling wheel-holding shafts (8A, 8B) is connected to a secondary shaft (17, 18), means permitting these two secondary shafts to be driven at the same speed with angular keying determined in relation to each other, these means comprising at least one motor (11), the primary shaft (12) of which is connected directly or indirectly to the two secondary shafts, a differential gear (30) making it possible to vary said angular keying and thus making it possible to adjust the keying of one milling wheel-holding shaft in relation to the other, each milling wheel being integrally formed with the milling wheel-holding shaft on which it is mounted by a high precision angular keying means constituted by a frontal toothed configuration or groove integrally formed with the milling wheel which is capable of engaging into a corresponding toothed configuration or groove integrally formed with the milling wheel-holding shaft, means for braking each milling wheel-holding shaft permitting the elimination of play, and motor means permitting the rotational driving of the part (7) to be formed, the rotational speed of the milling wheels and of the part to be formed being adjusted in such a way that the instantaneous speed Vp of the part is equal to Vm.N1/N2, in which ratio Vm is the instantaneous rotational speed of each milling wheel, N1 is the number of grooves or teeth of each milling wheel, and N2 is the number of grooves or teeth to be formed on the part.

16. A process according to Claim 15, characterised in that the instantaneous speeds Vp and Vm are constant during the period of penetration.

17. A process according to Claim 15, characterized in that during the period of penetration the part (7) which is rotating at a speed Vp is displaced along its axis of rotational movement (X1-X1).

18. A process according to Claim 15, characterised in that the parts are formed from revolving blanks which have a slight annular shoulder.

19. A process according to Claim 18, characterised in that the radial excess thickness of the annular shoulder is between 0.2 and 0.7 mm and its axial extension is between 1 and 5 mm.

**Patentansprüche**

1. Vorrichtung zum Kaltformen von Rillen oder Zähnen in die Seitenwand (10) eines Teils (7) mit zwei Formrollen (9A, 9B), die mit denselben Rillen oder derselben Zahnung, mit konstantem Profil, versehen sind, die beiderseits des Teils angeordnet und jeweils zur Drehung auf eine Welle (8A, 8B) aufgekeilt sind, wobei die Achsen (X2-X2, X3-X3) der Rollen symmetrisch bezüglich der Achse (X1-X1) des Teils angeordnet sind, Antriebseinrichtungen, die ermöglichen, die Wellen (8A, 8B) mit derselben Geschwindigkeit zu drehen, wobei das zu formende Teil durch eine Antriebseinrichtung in Drehung versetzt wird, wobei eine jede der beiden Wellen (8A, 8B) auf Lagern montiert ist, die mit Wagen oder Schlitten (3A, 3B) verbunden sind, die in der Lage sind, sich quer zu bewegen, Sychronisationseinrichtungen, die die Achsen (X2-X2, X3-X3) der Rollenträgerwellen (8A, 8B) abstandsgleich von der Achse (X1-X1) der Teilträgerwelle (5) halten, die in Querrichtung fest ist , einer Vorschubeinrichtung, die ermöglicht, den Abstand zwischen den Achsender beiden Rollen zu verringern, durch Bewegen der Schlitten, damit die beiden Rollen in die Seitenwand des Teils bis zu einer vorbestimmten Tiefe eindringen, wobei eine jede der beiden Rollenträgerwellen (8A, 8B) mit einer zweiten Welle (17, 18) verbunden ist, wobei die beiden zweiten Wellen mit gleicher Geschwindigkeit durch wenigstens eine erste Welle (12) angetrieben werden, die durch wenigstens einen Motor (11) angetrieben wird, dank Übertragungseinrichtungen, dadurch gekennzeichnet, daß diese Übertragungseinrichtungen ein Ausgleichsdifferential (27) aufweisen, das ermöglicht, die Übereinstimmung einer Rollenträgerwelle (8A) bezüglich der anderen Rollenträgerwelle (8B) einzustellen, und daß jede Rolle (9A) mit ihrer Rollenträgerwelle (8A) durch eine ringförmige Keileinrichtung von großer Genauigkeit verbunden ist, die durch eine frontale Zahnung oder frontale Rillen (43) gebildet wird, verbunden mit dem Rad, wobei sie in der Lage ist, in eine Zahnung oder entsprechende Rillen (44), die mit der Welle (8A) verbunden sind, einzugreifen, und daß Wellenbremsen in der Lage sind, ein Bremsen einer jeden Rollenträgerwelle zu erzeugen, um das Auffangen der bestehenden Spiele auf der Höhe einer jeden Rollenträgerwelle sicherzustellen, und daß eine Drehantriebseinrichtung (71, 72) des Teils (7), das gebildet werden soll, um seine Achse (X1-X1), ermöglicht, ihm eine Augenblicksdrehgeschwindigkeit Vp zu verleihen, derart, daß Vp = Vm N1/N2 , wobei Vm die Augenblicksgeschwindigkeit einer jeden Rolle ist, N1 die Anzahl der Rillen oder Zähne einer jeden Rolle und N2 die Anzahl der auf dem Teil auszubildenden Rillen oder Zähne ist.

2. Vorrichtung nach Anspruch 1, dadurch gekennzeichnet, daß die winkelförmige Keileinrichtung einer jeden Rolle durch vordere Zähne oder Rillen zwei Rinde (45, 46) aufweist, wobei einer mit der Rolle (8A) und der andere mit der Rollenträgerwelle (9A) verbunden ist, wobei die vorderen Zähne oder Rippen (43, 44) dieser beiden Ringe, die auf der Achse (X2-X2) der Rollenträgerwelle zentriert sind, in der Lage sind, durch axialen Druck ineinanderzugreifen.

3. Vorrichtung nach Anspruch 1 oder 2, dadurch gekennzeichnet, daß jede Welle (19), die eine Verbindung zwischen einer zweiten Antriebswelle (17) und der Rollenträgerwelle (8A), die ihr entspricht, sicherstellt, teleskopisch ist und zwei Gleitstücke (23, 24) aufweisen, die ineinander gleiten, wobei sie in der Drehbewegung durch Längsrillen (25, 26) verkeilt sind, wobei diese Stücke durch Gelenkverbindungen (21, 22) verbunden sind, das eine mit der zweiten Antriebsvorrichtungen und das andere mit der Rollenträgerwelle (8A).

4. Vorrichtung nach einem der einem der Ansprüche 1 bis 3, dadurch gekennzeichnet, daß die Synchronisiereinrichtungen, die die Achsen der Rollenträgerwellen auf gleicher Distanz zur Teilträgerwelle halten, einen schwenkbaren Balken (53) aufweisen, der auf einem Zapfen mit vertikaler Achse (X6) angebracht ist, und gelenkige starre Stangen (54, 55) aufweisen, die jeweils an einem Schlitten (3A, 3B) durch ein Ende und mit den Enden (58, 59) des Schwenkbalkens, durch das andere verbunden sind.

5. Vorrichtung nach einem der Ansprüchen 1 bis 4, dadurch gekennzeichnet, daß die Vorschubeinrichtung, die ermöglicht, die Rollen auf das zu formende Teil zuzuführen und sie in die Seitenwand von diesem Teil bis zu einer vorbestimmten Tiefe eindringen läßt, ein hydraulischer Stelltrieb (51) ist, der einen Zylinder verbunden mit einem der beiden Schlitten (3A) aufweist, der mit einem Vorschubkolben (61) versehen ist, der eine Stange (52) aufweist, die mit dem anderen Schlitten verbunden ist, wobei der hydraulische Druck, der auf den Kolben aufgebracht wird, die Annäherung der beiden Schlitten (3A, 3B) zueinander und somit der Achse (X1-X1) zu der Teilträgerwelle (5) hervorruft.

6. Vorrichtung nach einem der Ansprüche 1 bis 5, dadurch gekennzeichnet, daß die Antriebseinrichtung der Teilträgerwelle (5) ein geschwindigkeitseinstellbarer Motor (71) ist, der mit Getriebeeinrichtungen (73) verbunden ist.

7. Vorrichtungen nach einem der Ansprüche 1 bis 6, dadurch gekennzeichnet, daß die Motoren, die den Drehantrieb der Rollenträgerwellen und der Teilträgerwelle sicherstellen, Geschwindigkeitsveränderer aufweisen, deren Betrieb durch Unterstützeinrichtungen gesteuert wird, die ermöglichen, das Verhältnis der Drehgeschwindigkeit definiert durch die Gleichung $V_p = V_m . N_1/N_2$ beizubehalten.

8. Vorrichtung nach einem der Ansprüche 1 bis 7, dadurch gekennzeichnet, daß sie wenigstens eine Ausrichteinrichtung der Achse einer jeden Rollenträgerwelle in einer Ebene senkrecht zur Achse der Bewegung der Rolle in Richtung auf das durch Rollen zu verformende Teil aufweist.

9. Vorrichtung nach einem der Ansprüche 1 bis 8, dadurch gekennzeichnet, daß sie wenigstens eine Ausrichteinrichtung der Achse einer jeden Rollenträgerwelle in der Ebene aufweist, die die Achse des zu verformenden Teils enthält, die parallel ist zur Achse der Bewegung der Rolle in Richtung dieses zu verformendem Teils.

10. Vorrichtung nach Anspruch 8 oder 9, dadurch gekennzeichnet, daß die Ausrichteinrichtung der Achse der Rollenträgerwelle eine in zwei Freiheitsgraden ausrichtbare Platte ist.

11. Vorrichtung nach einem der Ansprüche 1 bis 10, dadurch gekennzeichnet, daß sie eine Translationseinrichtung, eine Motoreinrichtung (89) aufweist, die ermöglicht, das zu formende Teil (7) entlang seiner Achse (X1-X1) zu gleiten, während es der Einwirkung der Rollen unterworfen wird, um eine Reihenbildung durchzuführen.

12. Vorrichtung nach einem der Ansprüche 1 bis 11, dadurch gekennzeichnet, daß der Antriebsmotor (71) der Teilträgerwelle (5), des zu bilden Teils sowie der Geschwindigkeitreduzierer (72) über der Teilträgerwelle angeordnet sind, wobei die so geschaffene Anordnung mit einer ein Portal bildenden Struktur (81) verbunden sind, die über den Achsen der Rollenträgerwellen plaziert sind und Anschläge gegen die Basisstruktur der Vorrichtung aufweisen, wobei sie den Hindurchtritt der Schlitten freilassen.

13. Vorrichtung nach Anspruch 12, dadurch gekennzeichnet, daß die Portalstruktur (81) eine gelenkige Strebe (82) aufweist, die ermöglicht, über die Schlitten die Anordnung, die die Teilträgerwelle (5) sowie die Antriebseinrichtung (71, 72) und Getriebeeinrichtung (73) aufweist, anzuheben.

14. Vorrichtung nach Anspruch 12 oder 13, dadurch gekennzeichnet, daß die Portalstruktur (81) Gleitschienen (87, 88) aufweist, die eine Bewegung der Teilträgerwelle (5) und der Motor- (71, 72) und Übertragungseinrichtungen (73) entlang der Achse X1-X1 dank einer Antriebseinrichtung (89) ermöglichen, die ermöglicht, diese Gleitschienen um eine Translationsbewegung parallel zur Achse der Teile (X1-X1) zu bewegen.

15. Verfahren zum Kaltformen von Rillen oder Zähnen auf die Seitendrehwand eines Teils (7), das auf eine Welle (5) aufgebracht ist, in die man zwei Formungsrollen (9A, 9B) setzt, die jeweils auf einer Rollenträgerwelle (8A, 8B) montiert sind und mit Rillen oder Zähnen versehen sind, die identisch sind mit konstantem Profil, wobei die Achsen (X2-X2, X3-X3) der Rollenträgerwellen auf symmetrische Weise bezüglich der Achse (X1-X1) der Teilträgerwelle (5) angeordnet sind, wobei diese Symmetrie während des Durchführens des Verfahrens beibehalten wird, Verfahren bei dem Artriebseinrichtungen der Rollenträgerwellen verwendet werden, die ermöglichen, sie mit derselben Geschwindigkeit zu drehen und bei dem jede der Rollenträgerwellen in der Lage ist, sich quer zu verschieben, wobei die Achse der Teilträgerwelle festgehalten wird in Querrichtung und bei dem die Achsen der Rollenträgerwellen auf die Achse der Teilträgerwelle (5) bis zum Eindringen von Rillen oder Zähnen der Rollen in die Seitenwand (10) des Teils (7) bis zu einer vorbestimmten Tiefe zugeführt werden, und bei dem jede der beiden Rollträgerwellen (8A, 8B) mit einer zweiten Welle (17, 18) verbunden wird, wobei Einrichtungen den Antrieb dieser beiden zweiten Wellen mit derselben Geschwindigkeit mit einer vorbestimmten winkelmäßigen Verkeilung der einen bezüglich der anderen ermöglichen, wobei diese Einrichtungen wenigstens einen Motor (11), dessen erste Welle (12) direkt oder indirekt mit den beiden zweiten Wellen verbunden ist, wobei ein Differential (30) es ermöglicht, die winklige Keilung zu verändern und so die Übereinstimmung einer Rollenträgerwelle bezüglich der anderen einzustellen, aufweist, wobei jede Rolle mit der Rollenträgerwelle verbunden ist, auf der sie montiert ist, mittels einer Winkelverkeilungseinrichtung von großer Genauigkeit, gebildet aus einem vorderen Zahnkranz oder einer Rillung, die mit der Rolle verbunden ist, welche in der Lage ist, in den Zahnkranz oder die entsprechende Rillung, die mit der Rollenträgerwelle verbunden ist, in Eingriff zu kommen, Bremseinrichtungen einer jeden Rollenträgerwelle, die es ermöglicht, die Spiele zu eliminieren, und Antriebseinrichtungen aufweist, die den Drehantrieb des Zu formenden Teils (7) ermöglichen, wobei die Drehgeschwindigkeit der Rollen und des zu formenden Teils derart eingestellt werden, daß die Augenblicksgeschwindigkeit $Vp$ des Teils gleich $Vm.N1/N2$ ist, eine Gleichung, in der $Vm$ die Augenblicksdrehgeschwindigkeit einer jeden Rolle ist, $N1$ die Anzahl der Rippen oder Zähne einer jeden Rolle ist und $N2$ die Anzahl der Rillen oder Zähne, die auf dem Teil auszuformen sind, ist.

16. Verfahren nach Anspruch 15, dadurch gekennzeichnet, daß die Augenblicksgeschwindigkeiten $Vp$ und $Vm$ während der Eindringperiode konstant sind.

17. Verfahren nach Anspruch 15, dadurch gekennzeichnet, daß während der Eindringperiode das mit Geschwindigkeit $Vp$ drehende Teil (7) in Bewegung entlang seiner Drehachse (X1-X1) versetzt wird.

18. Verfahren nach Anspruch 15, dadurch gekennzeichnet, daß das Formen der Teile ausgehend von Drehvorsprüngen erzeugt wird, die eine leichte ringförmige Schulter aufweisen.

19. Verfahren nach Anspruch 18, dadurch gekennzeichnet, daß die radiale Überdicke der ringförmigen Schulter zwischen 0,2 und 0,7 mm beträgt und ihre axiale Erstreckung zwischen 1 und 5 mm beträgt.

Fig 1

Fig.2

Fig 4

Fig.5

Fig 6

Fig.7

Fig.3

Fig.8

Fig.9

EP 0 540 722 B1